# EUROPEAN PATENT APPLICATION

(11) **EP 3 737 002 A1**
(43) Date of publication of application: **11.11.2020**
(21) Application number: 20173338.3
(22) Date of filing: 06.05.2020
(51) Int. Cl.: H04B 7/185

(54) **AIRBORNE SUPPLEMENTAL COMMUNICATION DEVICE**

(30) Priority: 08.05.2019 US 201916406925
(71) Applicant: T-Mobile USA, Inc., Bellevue, WA 98006-1350 (US)
(72) Inventor: Lan, Wei-Ming, Bellevue, WA 98006-1350 (US)
(74) Representative: Hanna Moore + Curley

(57) **Abstract**

Techniques for improving signal quality of communication between a user equipment (UE) and a base station by launching a supplemental communication device as the UE experiences a degradation of the signal quality are discussed herein. In some cases, the techniques can be used to improve signal quality of a Fifth Generation (5G) millimeter wave band communication. Upon detecting that the signal quality has fallen below a preselected threshold, the supplemental communication device may be launched from a platform associated with the UE to establish an improved communication with the base station that is closer to a point-to-point communication while maintaining a communication with the UE. The supplemental communication device may track the movement of the UE and maintain the point-to-point communication with base station by directionally orienting its antenna(s) towards the base station and monitor and/or detect its surroundings to avoid physical obstructions.

## Description

### BACKGROUND

Modern telecommunications systems include heterogeneous mixtures of second, third, and fourth generation (2G, 3G, and 4G) cellular-wireless access technologies, which can be cross-compatible and can operate collectively to provide data communication services. Global Systems for Mobile (GSM) is an example of 2G telecommunications technologies; Universal Mobile Telecommunications System (UMTS) is an example of 3G telecommunications technologies; and Long Term Evolution (LTE), including LTE Advanced, and Evolved High-Speed Packet Access (HSPA+) are examples of 4G telecommunications technologies. As increased capabilities of user equipment (UE) enable greater data consumption, placing increased demands on networks, new networks with higher capabilities have been developed. The 5G telecommunications technologies are the next generation mobile networks that are designed to combine both an evolution and revolution of the existing LTE/LTE-A mobile networks to provide a much higher connectivity, greater throughput, much lower latency, and ultra-high reliability to support new use cases and applications.

The 5G telecommunications technologies utilize the existing LTE frequency band (600 MHz to 6 GHz) and millimeter wave bands (24-86 GHz) and aim to provide higher data rates and low latency. However, as a higher frequency is used, such as the millimeter band, the path loss associated with the higher frequency signal increases, leading to a shorter coverage for a given power, and the directionality of the signal becomes narrower, requiring a point-to-point communication. Compared to the existing telecommunication standards (2G, 3G, and 4G/LTE), the 5G millimeter wave telecommunication is more susceptible to the environment, for example, the surrounding of a user equipment (UE), which may quickly change, for example, from an open field to a street surrounded by tall buildings in a moving vehicle.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 illustrates an example environment in which the present disclosure may be implemented.
FIG. 2 illustrates another view of the example environment of FIG. 1.
FIG. 3 illustrates an example diagram of a supplemental communication device maintaining a communication between user equipment (UE) and a base station as the UE moves with a vehicle.
FIG. 4 illustrates an example block diagram of the supplemental communication device.
FIG. 5 illustrates a flowchart of an example process in accordance with the present disclosure.

### DETAILED DESCRIPTION

The methods, devices, and computer readable media discussed herein are directed to a fifth generation (5G) cellular-wireless access technology communication device, and more specifically, to improving a communication performance under a certain environment using a supplemental communication device.

The 5G telecommunications technologies utilize millimeter wave bands (24-86 GHz) for improving data rates and latency performance. However, a communication using a high frequency, such as the millimeter band, experiences a higher path loss and more directivity and compared to the existing telecommunication bands (e.g., non-millimeter bands associated with 2G, 3G, and 4G/LTE), requiring substantially a line-of-sight or a point-to-point communication with a target user equipment UE. Thus, in some cases, the 5G telecommunication is more susceptible to changes in the surrounding environment of the UE, for example, an open field compared to a city street surrounded by tall buildings.

As the UE experiences a degradation of a signal quality in a communication with a base station, such as a millimeter wave band communication with a 5G base station, a supplemental communication device may be launched to improve the signal quality of the communication with the base station. Upon detecting that the signal quality has fallen below a preselected threshold, the supplemental communication device may be launched from a platform associated with the UE, such as a vehicle of a user of the UE where the UE is currently located, to establish an improved communication with the base station that is closer to a point-to-point communication while maintaining a communication with the UE. As the location of the UE changes, for example the UE and the user of the UE in a moving vehicle, the supplemental communication device may track the movement of the UE and maintain the point-to-point communication with base station by directionally orienting its antenna(s) towards the base station and the communication with the UE. The supplemental communication device may also monitor and/or detect its surroundings and adjust its flight path to avoid physical obstructions.

Additionally, the supplemental communication device may be able to help extend a coverage area as the UE in the vehicle moves away from the coverage area by positioning the supplemental communication device in a more ideal position in the air than the vehicle position regardless of the cellular communication technologies or bands used.

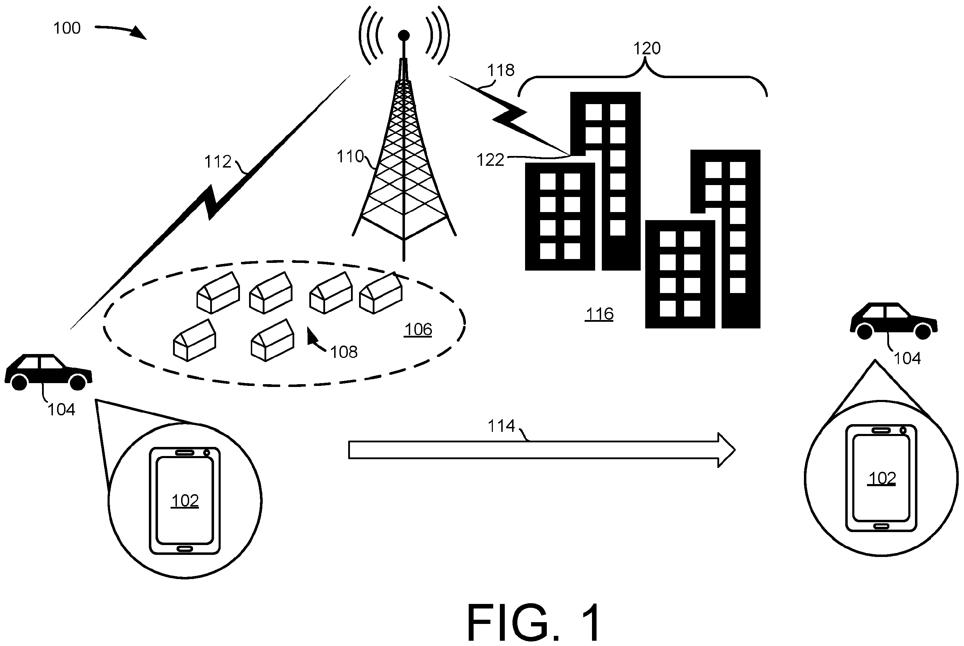

FIG. 1 illustrates an example environment 100, where the present disclosure may be implemented.

A UE 102 and a user (not shown) may be located in a moving vehicle 104, which may be traversing through a relatively open field of a residential area 106 with low buildings 108. In this environment, a communication path between a base station 110 and the vehicle 104 may be relatively free of obstructions and the base station 110 may be able to establish a point-to-point communication 112 with the UE 102 in the vehicle 104. However, as the vehicle 104 moves, as indicated by an arrow 114, and enters a city area 116, an intended point-to-point communication path 118 between the base station 110 and the UE 102 in the vehicle 104 may be obstructed with tall buildings 120, and the intended point-to-point communication 118 may be blocked at a point 122 by the tall buildings 120.

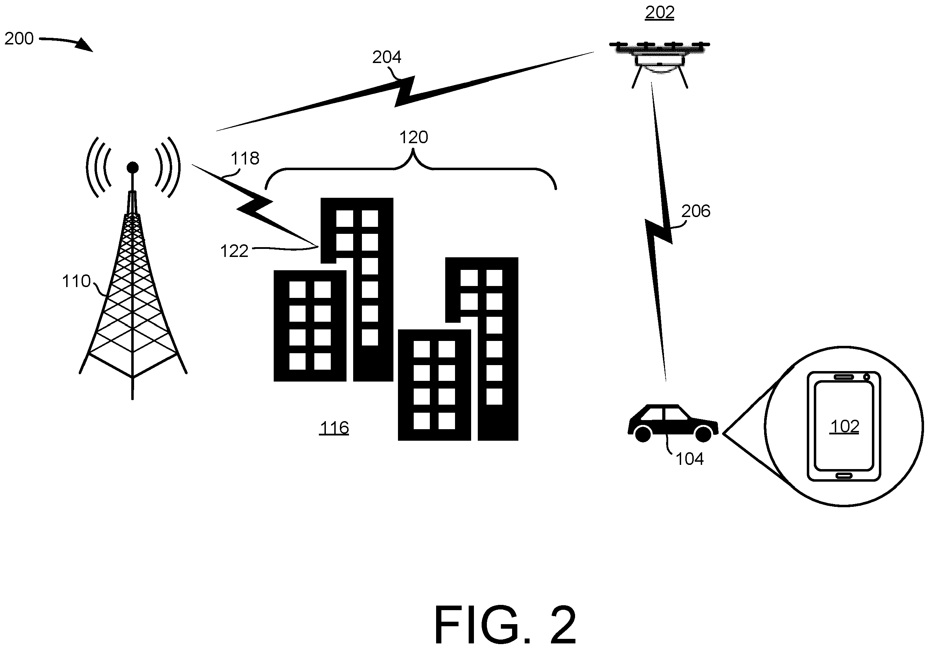

FIG. 2 illustrates an example solution 200 for the environment of FIG. 1.

Because the direct point-to-point communication path 118 with the base station 110 is blocked for the UE 102, thereby making the UE 102 unable to establish a communication with the base station 110, a supplemental communication device 202, including a flight control component, may be launched from the vehicle 104 to establish a point-to-point communication 204 with the base station 110. The supplemental communication device 202 may also establish a communication with the UE 102, thereby enabling the UE 102 to establish communication via the supplemental communication device 202 with the base station 110. The flight control component of the supplemental communication device 202 may include a propulsion component comprising one or more power sources, motors, propellers, control and navigation systems, etc., and launch itself from a platform on the vehicle 104. As the UE 102 moves with the vehicle 104, the supplemental communication device 202 may move along or follow the vehicle 104 based on information from the flight control component to maintain the communication between the UE 102 and the base station 110. While at the platform, the supplemental communication device 202 may recharge its power sources for the flight control component and communication components.

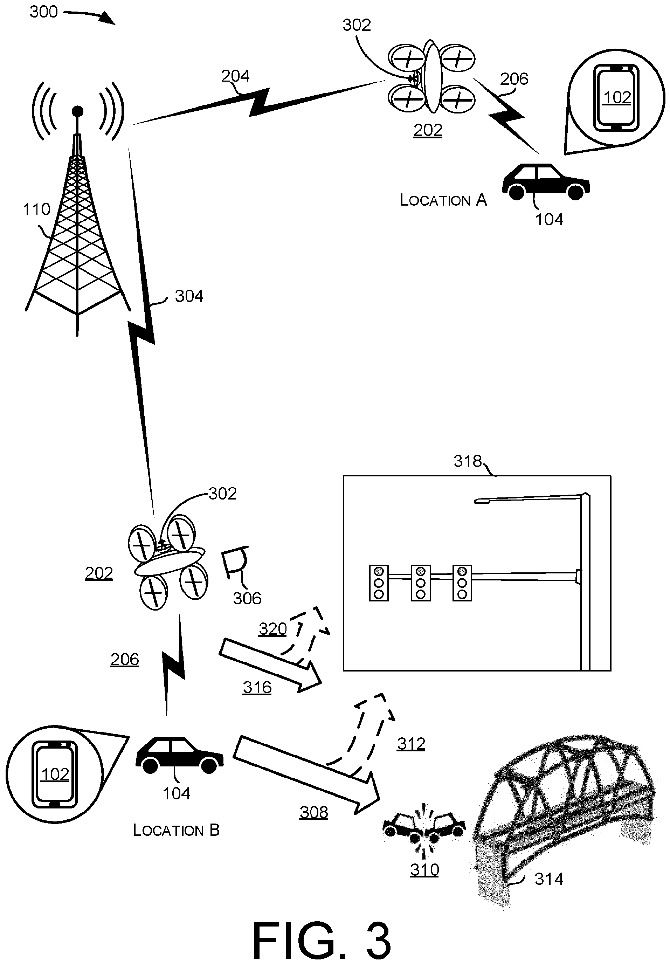

FIG. 3 illustrates an example diagram 300 of the supplemental communication device 202 maintaining the communication between the UE 102 and the base station 110 as the UE 102 moves with the vehicle 104.

As the vehicle 104 moves from a location A to a location B, the supplemental communication device 202 may follow the vehicle 104 to maintain the communication 206 with the UE 102. However, as the supplemental communication device 202 follows the movement of the vehicle 104, the location of the supplemental communication device 202 relative to the base station 110 changes from the location A to B, and the point-to-point communication between the base station 110 and the supplemental communication device 202 may degrade or be lost. To maintain the point-to-point communication with the base station 110, the supplemental communication device 202 may monitor a quality of the communication with the base station 110 and aim an antenna 302 towards the base station 110 to maintain the quality above a preselected threshold for a point-to-point communication 304. The quality of the communication monitored may include a quality of a signal from the base station 110 received by the supplemental communication device 202 such as a signal strength of the signal (e.g., received signal strength indicator (RSSI), reference signal received power (RSRP), etc.), a bit error rate of the signal, a frame error rate of the signal, a signal-to-noise ratio (SNR), and the like.

Although the antenna 302 is shown as a single antenna and the supplemental communication device 202 is oriented to aim the antenna 302 towards the base station, the antenna 302 may include a single antenna configured to be directionally oriented towards the base station 110, a plurality of sectorized antennas each of which having a corresponding sector for communicating with the base station 110, and an antenna array configured to directionally beam-form towards the base station 110 for communicating with the base station 110.

The supplemental communication device 202 may detect its surrounding. For example, the supplemental communication device 202 may detect the surroundings with sensor(s), such as one or more cameras, radar sensors, lidar sensors, sonar sensors, and the like, and provide visual data of its surroundings to the UE 102. A camera 306 is illustrated in FIG. 3 as an example of such sensors. The supplemental communication device 202 may detect its surroundings including a velocity, or a current path 308, of the UE 102, obstructions, such as an accident 310 in the current path 308, and obstructions in one or more alternate paths 312 that avoids the current path 308. The surroundings the supplemental communication device 202 detects may include obstructions, such as a bridge 314, in a current path 316 of the supplemental communication device 202 and obstructions, such as traffic lights 318, in one or more alternate paths 320 that avoids the current path 316 of the supplemental communication device 202. For example, if the vehicle were to follow the current path 308 and there were no accident, then the vehicle 104 could safely drive through the bridge 314. The supplemental communication device 202 might change its current path 316 to avoid colliding with the bridge 314. However, if the supplemental communication device 202 were to take the alternate path 320, the supplemental communication device 202 might further change its path to avoid colliding with the traffic lights 318.

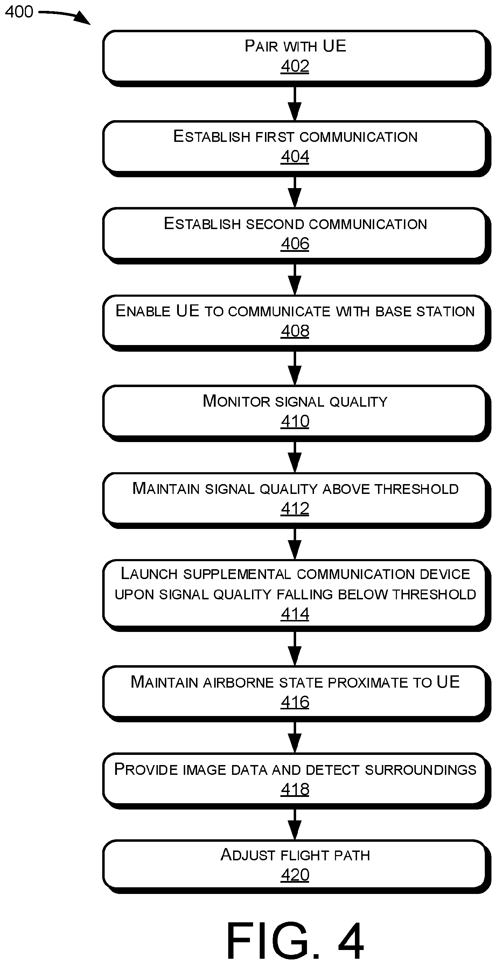

FIG. 4 illustrates a flowchart of an example process 400 in accordance with the present disclosure.

At block 402, the supplemental communication device 202 may pair with the UE 102 and establish a first communication, such as the communication 206, with the UE 102 at block 404. The first communication 206 between the supplemental communication device 202 with the UE 102 may be accomplished using wireless communication or a communication cable. The supplemental communication device 202 may establish a second communication, such as the communication 304, with the base station 110 at block 406, and enable the UE 102 to communicate with the base station 110 using the first and second communications 206 and 304 at block 408. At block 410, the supplemental communication device 202 may monitor the signal quality of a signal, such as the communication 304 received from the base station 110, and may maintain the signal quality above a threshold by aiming one or more antennas 302 of the supplemental communication device 202 at block 412. Upon detecting that the signal quality has fallen within a preselected range of the threshold or below the threshold, the supplemental communication device 202 may be launched from a landing platform at block 414 and the supplemental communication device 202 may maintain an airborne state proximate to the UE 102 at block 416.

The signal quality monitored at block 410 may include a signal strength of the signal (e.g., received signal strength indicator (RSSI), reference signal received power (RSRP), etc.) of the communication 304, a bit error rate of the signal, a frame error rate of the signal, a signal-to-noise ratio (SNR), and the like, received by the supplemental communication device 202. To maintain the signal quality above the threshold at block 412, the supplemental communication device 202 may directionally orienting the one or more antennas towards the base station 110, utilizing one of a plurality of sectorized antennas, each of the plurality of sectorized antennas having a corresponding sector and configured to maintain the signal quality above the threshold within the corresponding sector, or directionally beam-forming an antenna array towards the base station 110. However, if the supplemental communication device 202 is unable to maintain the signal quality above the threshold, the supplemental communication device 202 may notify the UE 102 and return to the platform of the vehicle 104. For example, once the signal quality falls below the threshold, the supplemental communication device 202 may stay airborne and continue attempting to maintain the communication with the base station 110 for a preselected time period, and if the signal quality does not reach above the threshold after the preselected time period, the supplemental communication device 202 may return to the platform.

At block 418, the supplemental communication device 202 may provide visual data of its surroundings and detect the surroundings based at least in part on the visual data. As described above with reference to FIG. 3, the surroundings detected may include a velocity of the UE 102, obstructions in a current path of the supplemental communication device 202, obstructions in one or more alternate paths that avoids the current path of the supplemental communication device 202, obstructions in a current path of the UE 102, and obstructions in one or more alternate paths that avoids the current path of the UE 102. At block 420, the supplemental communication device 202 may adjust a flight path based at least in part on the surroundings and maintain the supplemental communication device 202 within a predetermined proximity of the UE 102 based on the surroundings.

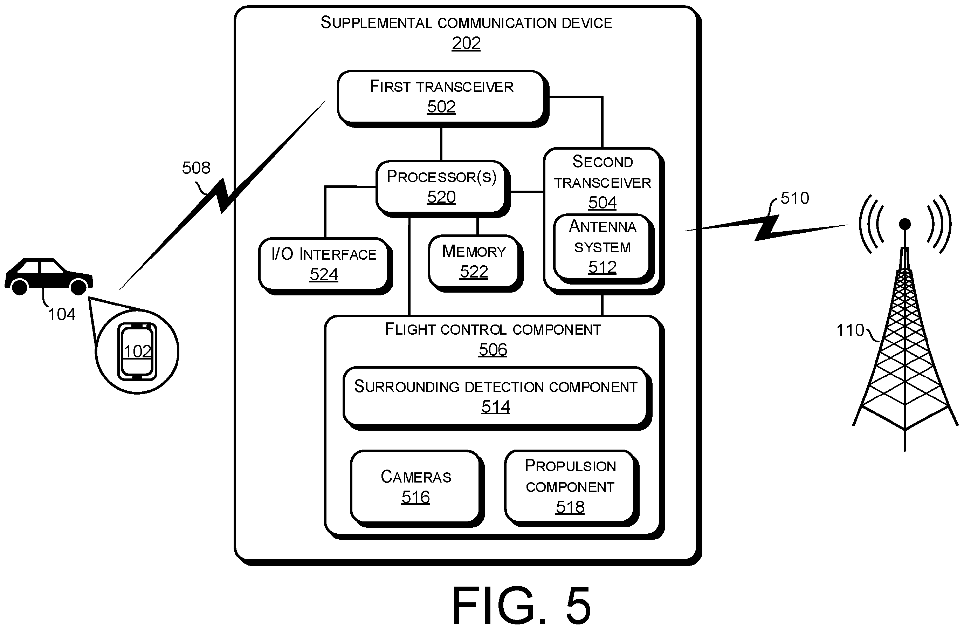

FIG. 5 illustrates an example block diagram of the supplemental communication device 202.

The supplemental communication device 202 may comprise a first transceiver 502, a second transceiver 504 coupled to the first transceiver 502, a flight control component 506. The first transceiver 502 may be configured to pair with the UE 102 and establish a communication 508 with the UE 102. Although the communication 508 is shown as a wireless communication, the first transceiver 502 may also establish the communication 508 with the UE 102 using a communication cable (not shown). The second transceiver 504 may be configured to communicate 510 with the base station 110, and together with the first transceiver 502, may enable the UE 102 to communicate with the base station 110. The flight control component 506 may be configured to maintain the supplemental communication device 202 in an airborne state proximate to the UE 102.

The second transceiver 504 may further include an antenna system 512 configured to aim one or more antennas, such as the antenna 302, of the antenna system 512 for communicating 510 with the base station 110 and maintaining a signal quality of the communication 510 with the base station 110 above a threshold. The signal quality the communication 510 may include a signal strength of a signal of the communication 510, a bit error rate of the signal, or a frame error rate of the signal, received by the second transceiver 504.

Although the antenna 302 is shown as a single antenna in FIG. 3, the antenna system 512 may have a different type of an antenna including a single antenna configured to be directionally oriented towards the base station 110 for maintaining the signal quality above the threshold with the base station 110, a plurality of sectorized antenna where each of the plurality of sectorized antennas has a corresponding sector and is configured to maintain the signal quality above the threshold with the base station 110 within the corresponding sector, and an antenna array configured to directionally beam-form towards the base station 110 for maintaining the signal quality above the threshold with the base station 110.

The flight control component 506 may be configured to maintain the supplemental communication device 202 in an airborne state proximate to the UE 102. The flight control component 506 may further comprise a surrounding detection component 514 which may include sensors 516, such as one or more cameras, radar sensors, lidar sensors, sonar sensors, and the like, to provide visual data of surroundings of the supplemental communication device 202 to the UE 102 as described with reference to FIG. 3 and detect the surroundings of the supplemental communication device 202 based at least in part on the visual data. The surroundings detected by the surrounding detection component 514 may include a velocity of the UE 102, obstructions in a current path of the supplemental communication device 202, obstructions in one or more alternate paths that avoids the current path of the supplemental communication device 202, obstructions in a current path of the UE 102, and obstructions in one or more alternate paths that avoids the current path of the UE 102.

The flight control component 506 may further comprise a propulsion component 518 comprising one or more power sources, motors, propellers, control and navigation systems, etc., may be configured to propel the supplemental communication device 202 including launching the supplemental communication device 202 from a landing platform upon the signal quality falling within a preselected range of the threshold, adjusting a flight path based at least in part on the surroundings, and maintaining the supplemental communication device 202 within a predetermined proximity of the UE 102 based on the surroundings, for example within 50 feet of the UE 102.

The supplemental communication device 202 may additionally comprise one or more processors 520 coupled to memory 522. The one or more processors 520 may also be coupled to the first transceiver 502, the second transceiver 504, and the flight control component 506, and may execute computer-readable instructions stored in the memory 522 to cause the components to perform associated operations as described above.

In some embodiments, the one or more processors 520 may be a central processing unit (CPU), a graphics processing unit (GPU), or both CPU and GPU, or other processing unit or component known in the art. Memory 522 may include volatile memory (such as random-access memory (RAM)) and/or non-volatile memory (such as read-only memory (ROM), flash memory, etc.).

The supplemental communication device 202 may include an Input/Output (I/O) interface 524 coupled to the one or more processors 520 and may include a keyboard, mouse, touch pad, touch screen, microphone, and the like, configured to receive information from a user, and may also include a speaker, display which may be a touchscreen, and the like, configured to provide an output for the user.

Some or all operations of the methods described above can be performed by execution of computer-readable instructions stored on a computer-readable storage medium, as defined below. The term "computer-readable instructions" as used in the description and claims, include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

The memory 522 discussed above with reference to FIG. 2-4 are examples of computer-readable media. Computer-readable media includes at least two types of computer-readable media, namely computer storage media and communications media. Computer storage media includes volatile and non-volatile, removable and non-removable media implemented in any process or technology for storage of information such as computer-readable instructions, data structures, program modules, or other data. Computer storage media includes, but is not limited to, phase change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disc read-only memory (CD-ROM), digital versatile discs (DVD) or other optical storage, magnetic cassettes, magnetic tape, magnetic disk storage or other magnetic storage devices, or any other non-transmission medium that can be used to store information for access by a computing device. In contrast, communication media may embody computer-readable instructions, data structures, program modules, or other data in a modulated data signal, such as a carrier wave, or other transmission mechanism. As defined herein, computer storage media does not include communication media.

The computer-executable instructions stored on one or more computer-readable storage media that, when executed by one or more processors, perform operations described above with reference to FIGs. 2-4. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the processes.

### EXAMPLE CLAUSES

A. A supplemental communication device comprising: a first transceiver configured to pair with a user equipment (UE) and to establish a communication with the UE; a second transceiver coupled to the first transceiver, the second transceiver configured to communicate with a base station, the first and second transceivers further configured to enable the UE to communicate with the base station; and a flight control component configured to maintain the supplemental communication device in an airborne state proximate to the UE.
B. The supplemental communication device as paragraph A recites, wherein the first transceiver is further configured to communicate with the UE using at least one of wireless communication or a communication cable.
C. The supplemental communication device as paragraph A recites, wherein the second transceiver further includes an antenna system configured to aim one or more antennas of the antenna system for communicating with the base station and maintaining a signal quality of the communication with the base station above a threshold.
D. The supplemental communication device as paragraph C recites, wherein the signal quality includes at least one of: a signal strength of the signal from the base station received by the second transceiver; a bit error rate of the signal from the base station received by the second transceiver; or a frame error rate of the signal from the base station received by the second transceiver.
E. The supplemental communication device as paragraph C recites, wherein the antenna system includes at least one of: a single antenna configured to be directionally oriented for maintaining the signal quality above the threshold with the base station, a plurality of sectorized antennas, each of the plurality of sectorized antennas having a corresponding sector and configured to maintain the signal quality above the threshold with the base station within the corresponding sector, or an antenna array configured to directionally beam-form for maintaining the signal quality above the threshold with the base station.
F. The supplemental communication device as paragraph A recites, wherein the flight control component further comprises a surrounding detection component, the surrounding detection component including one or more sensors configured to: provide visual data of surroundings of the supplemental communication device to the UE; and detect the surroundings of the supplemental communication device based at least in part on the visual data.
G. The supplemental communication device as paragraph F recites, the surroundings detected by the surrounding detection component includes: a velocity of the UE, obstructions in a current path of the supplemental communication device, obstructions in one or more alternate paths that avoids the current path of the supplemental communication device, obstructions in a current path of the UE, and obstructions in one or more alternate paths that avoids the current path of the UE.
H. The supplemental communication device as paragraph F recites, wherein the flight control component further comprises a propulsion component, the propulsion component configured to propel the supplemental communication device including: launching the supplemental communication device from a landing platform upon the signal quality falling within a preselected range of the threshold; adjusting a flight path based at least in part on the surroundings; maintaining the supplemental communication device within a predetermined proximity of the UE based on the surroundings.
I. A method in a supplemental communication device comprising: pairing with a user equipment (UE); establishing a first communication with the UE; establishing a second communication with a base station; enabling the UE to communicate with the base station using the first and second communications; monitoring a signal quality of a signal received from the base station; maintaining the signal quality above a threshold by aiming one or more antennas of the supplemental communication device; launching the supplemental communication device from a landing platform upon the signal quality falling within a preselected range of the threshold; and maintaining the supplemental communication device in an airborne state proximate to the UE.
J. The method as paragraph I recites, wherein the first communication with UE is accomplished using at least one of wireless communication or a communication cable.
K. The method as paragraph I recites, wherein the signal quality includes at least one of: a signal strength of the signal from the base station received by the supplemental communication device; a bit error rate of the signal from the base station received by the supplemental communication device; or a frame error rate of the signal from the base station received by the supplemental communication device.
L. The method as paragraph I recites, wherein aiming the one or more antennas of the supplemental communication device includes at least one of: directionally orienting the one or more antennas for maintaining the signal quality above the threshold, utilizing one of a plurality of sectorized antennas, each of the plurality of sectorized antennas having a corresponding sector and configured to maintain the signal quality above the threshold within the corresponding sector, or directionally beam-forming an antenna array for maintaining the signal quality above the threshold.
M. The method of as paragraph I recites, further comprising: providing visual data of surroundings of the supplemental communication device to the UE; and detecting the surroundings of the supplemental communication device based at least in part on the visual data, wherein the surroundings detected includes: a velocity of the UE, obstructions in a current path of the supplemental communication device, obstructions in one or more alternate paths that avoids the current path of the supplemental communication device, obstructions in a current path of the UE, and obstructions in one or more alternate paths that avoids the current path of the UE.
N. The method as paragraph M recites, wherein maintaining the supplemental communication device in the airborne state proximate to the UE includes: adjusting a flight path based at least in part on the surroundings; and maintaining the supplemental communication device within a predetermined proximity of the UE based on the surroundings.
O. A non-transitory computer storage medium configured to store computer-readable instructions by one or more processors of a supplemental communication device, that when executed, cause the one or more processors to perform operations comprising: pairing with a user equipment (UE); establishing a first communication with the UE; establishing a second communication with a base station; enabling the UE to communicate with the base station using the first and second communications; monitoring a signal quality of a signal received from the base station; maintaining the signal quality above a threshold by aiming one or more antennas of the supplemental communication device; launching the supplemental communication device from a landing platform upon the signal quality falling within a preselected range of the threshold; and maintaining the supplemental communication device in an airborne state proximate to the UE.
P. The non-transitory computer storage medium as paragraph O recites, wherein the first communication with the UE is accomplished using at least one of wireless communication or a communication cable.
Q. The non-transitory computer storage medium as paragraph O recites, wherein the signal quality includes at least one of: a signal strength of the signal from the base station received by the supplemental communication device; a bit error rate of the signal from the base station received by the supplemental communication device; or a frame error rate of the signal from the base station received by the supplemental communication device.
R. The non-transitory computer storage medium as paragraph O recites, wherein aiming the one or more antennas of the supplemental communication device includes at least one of: directionally orienting the one or more antennas for maintaining the signal quality above the threshold, utilizing one of a plurality of sectorized antennas, each of the plurality of sectorized antennas having a corresponding sector and configured to maintain the signal quality above the threshold within the corresponding sector, or directionally beam-forming an antenna array for maintaining the signal quality above the threshold.
S. The non-transitory computer storage medium as paragraph O recites, wherein the operations further comprise: providing visual data of surroundings of the supplemental communication device to the UE; and detecting the surroundings of the supplemental communication device based at least in part on the visual data, wherein the surroundings detected includes: a velocity of the UE, obstructions in a current path of the supplemental communication device, obstructions in one or more alternate paths that avoids the current path of the supplemental communication device, obstructions in a current path of the UE, and obstructions in one or more alternate paths that avoids the current path of the primary communication device.
T. The non-transitory computer storage medium as paragraph S recites, wherein maintaining the supplemental communication device in the airborne state proximate to the UE includes: adjusting a flight path based at least in part on the surroundings; and maintaining the supplemental communication device within a predetermined proximity of the UE based on the surroundings.

### CONCLUSION

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

The present teaching may also be extended to the features of one or more of the following numbered clauses.

### CLAUSES

1. A supplemental communication device comprising:
   a first transceiver configured to pair with a user equipment (UE) and to establish a communication with the UE;
   a second transceiver coupled to the first transceiver, the second transceiver configured to communicate with a base station, the first transceiver and the second transceiver further configured to enable the UE to communicate with the base station; and
   a flight control component configured to maintain the supplemental communication device in an airborne state proximate to the UE.
2. The supplemental communication device of clause 1, wherein the first transceiver is further configured to communicate with the UE using at least one of wireless communication or a communication cable.
3. The supplemental communication device of clause 1, wherein the second transceiver further includes an antenna system configured to aim one or more antennas of the antenna system for communicating with the base station and maintaining a signal quality of the communication with the base station above a threshold.
4. The supplemental communication device of clause 3, wherein the signal quality includes at least one of:
   a signal strength of the signal from the base station received by the second transceiver;
   a bit error rate of the signal from the base station received by the second transceiver;
   a frame error rate of the signal from the base station received by the second transceiver, or
   a signal-to-noise ratio.
5. The supplemental communication device of clause 3, wherein the antenna system includes at least one of:
   a single antenna configured to be directionally oriented for maintaining the signal quality above the threshold with the base station,
   a plurality of sectorized antennas, each of the plurality of sectorized antennas having a corresponding sector and configured to maintain the signal quality above the threshold with the base station within the corresponding sector, or
   an antenna array configured to directionally beam-form for maintaining the signal quality above the threshold with the base station.
6. The supplemental communication device of clause 1, wherein the flight control component further comprises a surrounding detection component, the surrounding detection component including one or more sensors configured to:
   provide visual data of surroundings of the supplemental communication device to the UE; and
   detect the surroundings of the supplemental communication device based at least in part on the visual data.
7. The supplemental communication device of clause 6, the surroundings detected by the surrounding detection component includes:
   a velocity of the UE,
   obstructions in a current path of the supplemental communication device,
   obstructions in one or more alternate paths that avoids the current path of the supplemental communication device,
   obstructions in a current path of the UE, and
   obstructions in one or more alternate paths that avoids the current path of the UE.
8. The supplemental communication device of clause 5, wherein the flight control component further comprises a propulsion component, the propulsion component configured to propel the supplemental communication device including:
   launching the supplemental communication device from a landing platform upon the signal quality falling within a preselected range of the threshold;
   adjusting a flight path based at least in part on the surroundings; and
   maintaining the supplemental communication device within a predetermined proximity of the UE based on the surroundings.
9. A method in a supplemental communication device comprising:
   pairing with a user equipment (UE);
   establishing a first communication with the UE;
   establishing a second communication with a base station;
   enabling the UE to communicate with the base station using the first and second communications;
   monitoring a signal quality of a signal received from the base station;
   maintaining the signal quality above a threshold by aiming one or more antennas of the supplemental communication device;
   launching the supplemental communication device from a landing platform upon the signal quality falling within a preselected range of the threshold; and
   maintaining the supplemental communication device in an airborne state proximate to the UE.
10. The method of clause 9, wherein the first communication with UE is accomplished using at least one of wireless communication or a communication cable.
11. The method of clause 9, wherein the signal quality includes at least one of:
   a signal strength of the signal from the base station received by the supplemental communication device;
   a bit error rate of the signal from the base station received by the supplemental communication device;
   a frame error rate of the signal from the base station received by the supplemental communication device, or
   a signal-to-noise ratio.
12. The method of clause 9, wherein aiming the one or more antennas of the supplemental communication device includes at least one of:
   directionally orienting the one or more antennas for maintaining the signal quality above the threshold,
   utilizing one of a plurality of sectorized antennas, each of the plurality of sectorized antennas having a corresponding sector and configured to maintain the signal quality above the threshold within the corresponding sector, or
   directionally beam-forming an antenna array for maintaining the signal quality above the threshold.
13. The method of clause 9, further comprising:
   providing visual data of surroundings of the supplemental communication device to the UE; and
   detecting the surroundings of the supplemental communication device based at least in part on the visual data,
   wherein the surroundings detected includes:
      a velocity of the UE,
      obstructions in a current path of the supplemental communication device,
      obstructions in one or more alternate paths that avoids the current path of the supplemental communication device,
      obstructions in a current path of the UE, and
      obstructions in one or more alternate paths that avoids the current path of the UE.
14. The method of clause 13, wherein maintaining the supplemental communication device in the airborne state proximate to the UE includes:
   adjusting a flight path based at least in part on the surroundings; and
   maintaining the supplemental communication device within a predetermined proximity of the UE based on the surroundings.
15. A non-transitory computer storage medium configured to store computer-readable instructions by one or more processors of a supplemental communication device, that when executed, cause the one or more processors to perform operations comprising:
   pairing with a user equipment (UE);
   establishing a first communication with the UE;
   establishing a second communication with a base station;
   enabling the UE to communicate with the base station using the first and second communications;
   monitoring a signal quality of a signal received from the base station;
   maintaining the signal quality above a threshold by aiming one or more antennas of the supplemental communication device;
   launching the supplemental communication device from a landing platform upon the signal quality falling within a preselected range of the threshold; and
   maintaining the supplemental communication device in an airborne state proximate to the UE.
16. The non-transitory computer storage medium of clause 15, wherein the first communication with the UE is accomplished using at least one of wireless communication or a communication cable.
17. The non-transitory computer storage medium of clause 15, wherein the signal quality includes at least one of:
   a signal strength of the signal from the base station received by the supplemental communication device;
   a bit error rate of the signal from the base station received by the supplemental communication device;
   a frame error rate of the signal from the base station received by the supplemental communication device, or
   a signal-to-noise ratio.
18. The non-transitory computer storage medium of clause 15, wherein aiming the one or more antennas of the supplemental communication device includes at least one of:
   directionally orienting the one or more antennas for maintaining the signal quality above the threshold,
   utilizing one of a plurality of sectorized antennas, each of the plurality of sectorized antennas having a corresponding sector and configured to maintain the signal quality above the threshold within the corresponding sector, or
   directionally beam-forming an antenna array for maintaining the signal quality above the threshold.
19. The non-transitory computer storage medium of clause 15, wherein the operations further comprise:
   providing visual data of surroundings of the supplemental communication device to the UE; and
   detecting the surroundings of the supplemental communication device based at least in part on the visual data,
   wherein the surroundings detected includes:
      a velocity of the UE,
      obstructions in a current path of the supplemental communication device,
      obstructions in one or more alternate paths that avoids the current path of the supplemental communication device,
      obstructions in a current path of the UE, and
      obstructions in one or more alternate paths that avoids the current path of the primary communication device.
20. The non-transitory computer storage medium of clause 19, wherein maintaining the supplemental communication device in the airborne state proximate to the UE includes:
   adjusting a flight path based at least in part on the surroundings; and
   maintaining the supplemental communication device within a predetermined proximity of the UE based on the surroundings.

## Claims

1. A supplemental communication device comprising:
a first transceiver configured to pair with a user equipment (UE) and to establish a communication with the UE;
a second transceiver coupled to the first transceiver, the second transceiver configured to communicate with a base station, the first transceiver and the second transceiver further configured to enable the UE to communicate with the base station; and
a flight control component configured to maintain the supplemental communication device in an airborne state proximate to the UE.

2. The supplemental communication device of claim 1, wherein the first transceiver is further configured to communicate with the UE using at least one of wireless communication or a communication cable.

3. The supplemental communication device of any preceding claim, wherein the second transceiver further includes an antenna system configured to aim one or more antennas of the antenna system for communicating with the base station and maintaining a signal quality of the communication with the base station above a threshold, the signal quality including at least one of:
a signal strength of the signal from the base station received by the second transceiver;
a bit error rate of the signal from the base station received by the second transceiver;
a frame error rate of the signal from the base station received by the second transceiver, or
a signal-to-noise ratio.

4. The supplemental communication device of claim 3, wherein the antenna system includes at least one of:
a single antenna configured to be directionally oriented for maintaining the signal quality above the threshold with the base station,
a plurality of sectorized antennas, each of the plurality of sectorized antennas having a corresponding sector and configured to maintain the signal quality above the threshold with the base station within the corresponding sector, or
an antenna array configured to directionally beam-form for maintaining the signal quality above the threshold with the base station.

5. The supplemental communication device of any preceding claim, wherein the flight control component further comprises:
a surrounding detection component, the surrounding detection component including one or more sensors configured to:
provide visual data of surroundings of the supplemental communication device to the UE; and
detect the surroundings of the supplemental communication device based at least in part on the visual data,
a propulsion component, the propulsion component configured to propel the supplemental communication device including:
launching the supplemental communication device from a landing platform upon the signal quality falling within a preselected range of the threshold;
adjusting a flight path based at least in part on the surroundings; and
maintaining the supplemental communication device within a predetermined proximity of the UE based on the surroundings.

6. The supplemental communication device of claim 5, the surroundings detected by the surrounding detection component includes:
a velocity of the UE,
obstructions in a current path of the supplemental communication device,
obstructions in one or more alternate paths that avoids the current path of the supplemental communication device,
obstructions in a current path of the UE, and
obstructions in one or more alternate paths that avoids the current path of the UE.

7. A method in a supplemental communication device comprising:
pairing with a user equipment (UE);
establishing a first communication with the UE;
establishing a second communication with a base station;
enabling the UE to communicate with the base station using the first and second communications;
monitoring a signal quality of a signal received from the base station;
maintaining the signal quality above a threshold by aiming one or more antennas of the supplemental communication device;
launching the supplemental communication device from a landing platform upon the signal quality falling within a preselected range of the threshold; and
maintaining the supplemental communication device in an airborne state proximate to the UE.

8. The method of claim 7, wherein:
the first communication with UE is accomplished using at least one of wireless communication or a communication cable, and
the signal quality includes at least one of:
a signal strength of the signal from the base station received by the supplemental communication device;
a bit error rate of the signal from the base station received by the supplemental communication device;
a frame error rate of the signal from the base station received by the supplemental communication device, or
a signal-to-noise ratio.

9. The method of claim 7 or 8, wherein aiming the one or more antennas of the supplemental communication device includes at least one of:
directionally orienting the one or more antennas for maintaining the signal quality above the threshold,
utilizing one of a plurality of sectorized antennas, each of the plurality of sectorized antennas having a corresponding sector and configured to maintain the signal quality above the threshold within the corresponding sector, or
directionally beam-forming an antenna array for maintaining the signal quality above the threshold.

10. The method of any one of claims 7 to 9, further comprising:
providing visual data of surroundings of the supplemental communication device to the UE; and
detecting the surroundings of the supplemental communication device based at least in part on the visual data,
wherein the surroundings detected includes:
a velocity of the UE,
obstructions in a current path of the supplemental communication device,
obstructions in one or more alternate paths that avoids the current path of the supplemental communication device,
obstructions in a current path of the UE, and
obstructions in one or more alternate paths that avoids the current path of the UE.

11. The method of claim 10, wherein maintaining the supplemental communication device in the airborne state proximate to the UE includes:
adjusting a flight path based at least in part on the surroundings; and
maintaining the supplemental communication device within a predetermined proximity of the UE based on the surroundings.

12. A non-transitory computer storage medium configured to store computer-readable instructions by one or more processors of a supplemental communication device, that when executed, cause the one or more processors to perform operations comprising:
pairing with a user equipment (UE);
establishing a first communication with the UE;
establishing a second communication with a base station;
enabling the UE to communicate with the base station using the first and second communications;
monitoring a signal quality of a signal received from the base station;
maintaining the signal quality above a threshold by aiming one or more antennas of the supplemental communication device;
launching the supplemental communication device from a landing platform upon the signal quality falling within a preselected range of the threshold; and
maintaining the supplemental communication device in an airborne state proximate to the UE including:
adjusting a flight path based at least in part on surroundings of the supplemental communication device, and
maintaining the supplemental communication device within a predetermined proximity of the UE based on the surroundings.

13. The non-transitory computer storage medium of claim 12, wherein:
the first communication with the UE is accomplished using at least one of wireless communication or a communication cable, and
the signal quality includes at least one of:
a signal strength of the signal from the base station received by the supplemental communication device;
a bit error rate of the signal from the base station received by the supplemental communication device;
a frame error rate of the signal from the base station received by the supplemental communication device, or
a signal-to-noise ratio.

14. The non-transitory computer storage medium of claim 12 or 13, wherein aiming the one or more antennas of the supplemental communication device includes at least one of:
directionally orienting the one or more antennas for maintaining the signal quality above the threshold,
utilizing one of a plurality of sectorized antennas, each of the plurality of sectorized antennas having a corresponding sector and configured to maintain the signal quality above the threshold within the corresponding sector, or
directionally beam-forming an antenna array for maintaining the signal quality above the threshold.

15. The non-transitory computer storage medium of any one of claims 12 to 14, wherein the operations further comprise:
providing visual data of the surroundings to the UE; and
detecting the surroundings based at least in part on the visual data,
wherein the surroundings detected includes:
a velocity of the UE,
obstructions in a current path of the supplemental communication device,
obstructions in one or more alternate paths that avoids the current path of the supplemental communication device,
obstructions in a current path of the UE, and
obstructions in one or more alternate paths that avoids the current path of the primary communication device.
